# EUROPÄISCHE PATENTSCHRIFT

(11) **EP 0 691 063 B1**
(45) Veröffentlichungstag und Bekanntmachung des Hinweises auf die Patenterteilung: **27.02.2002**
(21) Anmeldenummer: 94912491.1
(22) Anmeldetag: 21.03.1994
(51) Int. Cl.: H04N 3/15, H04N 5/335

(54) **VERFAHREN UND VORRICHTUNG ZUR ÖRTLICHEN FILTERUNG BELIEBIG STRUKTURIERTER OBJEKTE**
METHOD AND DEVICE FOR SPATIAL FILTERING OF OBJECTS WITH ANY TYPE OF SURFACE FEATURE
PROCEDES ET DISPOSITIF DE FILTRAGE SPATIAL D'OBJETS DE STRUCTURE QUELCONQUE

(30) Priorität: 26.03.1993 DE 4309959
(43) Veröffentlichungstag der Anmeldung: 10.01.1996
(73) Patentinhaber: Christofori, Klaus, D-18069 Rostock (DE)
(72) Erfinder: Christofori, Klaus, D-18069 Rostock (DE)
(74) Vertreter: Schnick, Achim
(86) Internationale Anmeldenummer: EP9400878
(87) Internationale Veröffentlichungsnummer: WO9423533

(56) Entgegenhaltungen:
- WO-A-87/03138
- US-A- 4 472 638
- US-A- 5 153 731
- PATENT ABSTRACTS OF JAPAN vol. 16, no. 535 (E-1288) 5. November 1992 & JP,A,04 200 161 (MATSUSHITA ELECTRIC IND CO LTD) 21. Juli 1992

## Beschreibung

Die Erfindung bezieht sich auf ein Verfahren zur örtlichen Filterung beliebig strukturierter Objekte mittels lichtfeldartiger Strukturen, insbesondere mit gitterartigem Aufbau, bei denen das Gitter durch Detektorflächen als Gitterelemente und den Distanzflächen als Übergangszonen gebildet wird, und deren Anwendung auf optische Sensoren in Form von Photodiodenarrays, CCD-Zeilen oder -Matrizen mit ein oder mehreren Transportregistern bzw. magnetoristriktive oder thermische Sensoren, wobei die Detektorfläche parallel zur Objektoberfläche bzw. deren Bewegung und die Detektorachse in Bewegungsrichtung ausgerichtet ist, sowie eine Vorrichtung zur Durchführung des Verfahrens.

Optische Datenverarbeitungsstrukturen sind gegenwärtig vornehmlich dort im Einsatz, wo es darum geht hohe Verarbeitungsgeschwindigkeiten zu erzielen. Eine weite Verbreitung haben hybride Strukturen gefunden, die optisch- analog-elektronische Verfahren nutzen.
Bekannterweise wurden analoge Transportschieberegister, die nach dem Eimerkettenprinzip arbeiten erstmalig in der Nachrichtentechnik zur Realisierung von rekursiven als auch nicht rekursiven Transversalfiltern realisiert. Derartige Eimerkettenschaltungen besitzen einen seriellen Eingang an den die Signalinformation z.B. in Form einer Spannung angelegt wird. Der Signalpegel wird in eine Ladung umgesetzt, die in den Potentialwannen eines MOS-Kondensators gespeichert werden kann. Durch Anlegen eines Taktes an entsprechende Elektroden lassen sich Potentialbarrieren derart auf- oder abbauen, daß es zu einem stufenweisen Transport der Ladung kommt. Eine Eimerkettenschaltung der Länge N realisiert demzufolge eine Zeitverzögerungsschaltung mit einer maximalen Verzögerung von N-Takten. Genannte Transversalfilter bestehen aus Eimerkettenschaltungen mit Schaltmitteln an verschiedenen Stufen, die ein Abtasten, Wichten und Summieren der Information gestatten.

Aus OS-DE 3104521 ist ein CTD-Transversalfilter bekannt, bei dem zeitverzögerte Formen eines gegeben Eingangssignales zum Erzeugen der Filtercharakteristik gewichtet und anschließend summiert werden, wobei die Wichtungskoeffizienten sowohl ein negatives als auch ein positives Vorzeichen aufweisen können. Das CTD-Filter weist drei Eingangsstufen auf, die jeweils ein, zwei und drei Speicherzellen enthalten und die erforderliche Verzögerung realisieren. Die zugehörigen Koeffizienten sind durch die wirksame Fläche der einzelnen Eingangselektroden festgelegt, wobei das Verhältnis der Flächen dem gewünschten Verhältnis der Koeffizienten entspricht. Die Vorzeichen werden realisiert, indem die Eingangsstufen jeweils einen invertierenden bzw. nichtinvertieren Zweig besitzen, der durch eine entsprechende Steuerspannung aktiviert werden kann. Die Summation erfolgt infolge der konstruktiven Zusammenführung der drei Eingangsstufen im Bereich des ersten Elementes des gemeinsamen Kanals. Das genannte Transversalfilter realisiert nachteilig Filter bis 2. Ordnung und erlaubt keine Modifikation der Filtereigenschaften aufgrund fest vorgegebener Koeffizienten.
Aus OS-DE 3114886 ist eine Filterschaltung mit einer Ladungsverschiebeinrichtung bekannt, die zwei Sätze von Ladungsspeicherelementen enthält, die durch Taktsignale jeweils separat ansteuerbar sind derart, daß ein Halbleiterschaltungselement, welches in Abhängigkeit von einem ausgewählten Taktsignal aus dem Paar von ersten und zweiten Taktsignalen aktiviert werden kann, um Ladung, die in einem vorbestimmten ersten Ladungsspeicherelement zu transportieren, und daß Ausgangsschaltmittel vorgesehen sind, welche mit einem vorausgewählten Ladungsspeicherelement gekoppelt sind, um ein Ausgangssignal aus der Filterschaltung zu entnehmen. Die vorgestellte Filterschaltung ist gleicherrnaßen als rekursives und nichtrekursives Filter betreibbar.
Für die vorgesehene Ortsfilterung sind derartige Strukturen nachteilig, da die Schaltmittel, die eine parallele Abtastung der Stufen der Eimerkettenschaltung nicht erforderlich sind und daher unnötig einen zu hohen Schaltungsaufwand erfordern. Gleichermaßen ist für die Integration kleiner Ladungspakete eine hohe Transporteffizienz erforderlich, die von derartigen Eimerkettenschaltungen nicht erreicht wird. Ebenso ist das Problem des Überlaufens einzelner Transportelemente, bei der Integration ein ernst zu nehmender Fehlereinfluß, unberücksichtigt.

Es ist bekannt, daß in der Fernsehtechnik Halbleiterfarbfernsehkameras mit optischen Filtern, sogenannten Ortsfrequenzfiltern, Aliasing-Fehler unterdrückt werden. Derartige Fehler sind die Folge einer Nichtbeachtung der Nyquistfrequenz bei Abtastung höherfrequenter Bildinformation. In der Regel sind es optische Tiefpaßfilter, die in Form von Farbmosaikfiltern schachbrettartig vor den Detektorflächen angeordnet sind.
OS-DE 3515020 ist ein Ortsfrequenzfilter bekannt, welches eine zweidimensionale Ortsfrequenzebene enthält und durch eine hohe Dämpfung um den Bereich der Nullstelle herum Farbnebensignale im Fernsehbild unterdrückt. Die Ortsfrequenzfilterung wird durch eine sandwichartige Anordnung von Savartschen Platten, mit jeweils unterschiedlicher Polarisationsrichtung, erreicht.
Der Nachteil derartige Ortsfrequenzfilter ist durch die konstruktiv bedingten, festen Parameter gegeben. Desweiteren ist es für die vorliegende Aufgabe erforderlich, selektiv zu arbeiten, wogegen die Auslegung als Tiefpaß spricht.

Aufgabe der vorliegenden Erfindung ist es, ein Verfahren anzugeben, welches auf analogelektronischem Wege eine Ortsfrequenzfilterung der Bildinformation vornimmt, sowie eine Vorrichtung zur Durchführung des Verfahrens anzugeben, die es gestattet, Bilder beliebig strukturierter Objekte zu erfassen und zu verarbeiten, wobei die Filtereigenschaften elektronisch modifizierbar sind. Femer besteht die Aufgabe darin, ein selektives Ortsfrequenzfilter mit einer verhältnismäßig einfachen Struktur zu schaffen.

Diese Aufgabe wird gemäß der Erfindung durch die Merkmale der Ansprüche 1 und 3 gelöst.

Die Erfindung ist im folgenden anhand eines Ausführungsbeispiels und in Verbindung mit der Zeichnung näher beschrieben. Im einzelnen zeigen:
- Fig. 1: Eine Ortsfrequenzfilterung mit opto-elektronischem Sensor,
- Fig. 2: eine Ortsfrequenzfilterung mit akusto-elektronischem Sensor,
- Fig. 3: den Intergrator vereinfacht und in symbolischer Blockdarstellung,
- Fig. 4: eine Signalverarbeitungseinheit mit paarweise ausgeführtem Signalverarbeitungskanal in symbolischer Blockdarstellung,
- Fig. 5: eine Ortsfrequenzfilteranordnung mit Integrator und Frequenzauswertung in symbolischer Blockdarstellung,
- Fig. 6: der Zerro-Crossing-Detektor/Counter in symbolischer Blockdarstellung.

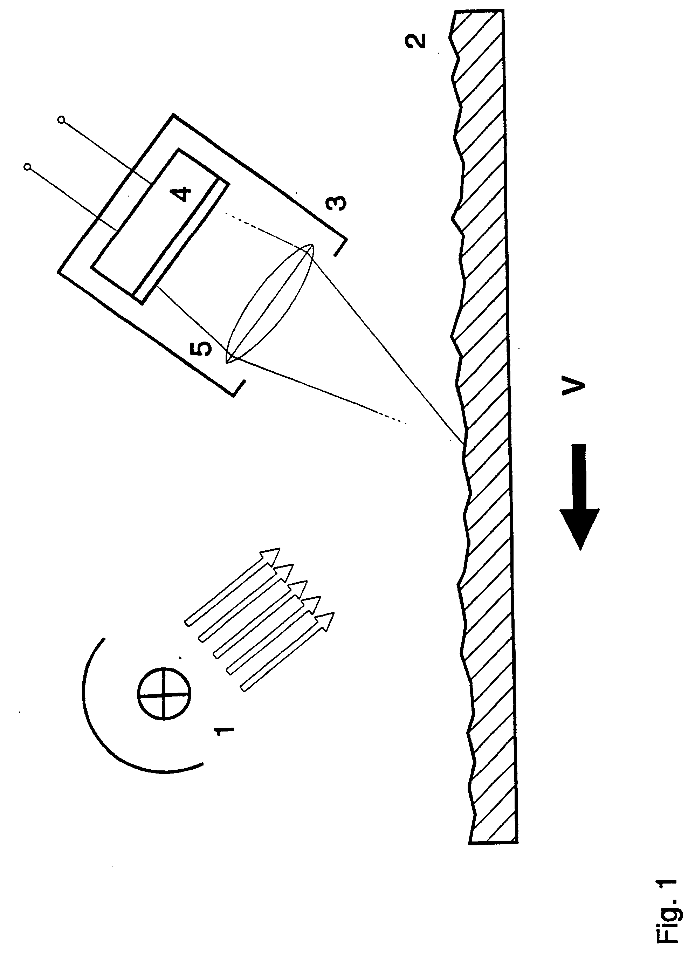

Gemäß Fig. 1 wird bei einer Ortsfrequenzfilterung mit opto-elektronischem Sensor ein beliebig strukturiertes Objekt **2** mit weißem Licht **1** beleuchtet und über eine Optik **5** auf den Sensor **4** abgebildet.

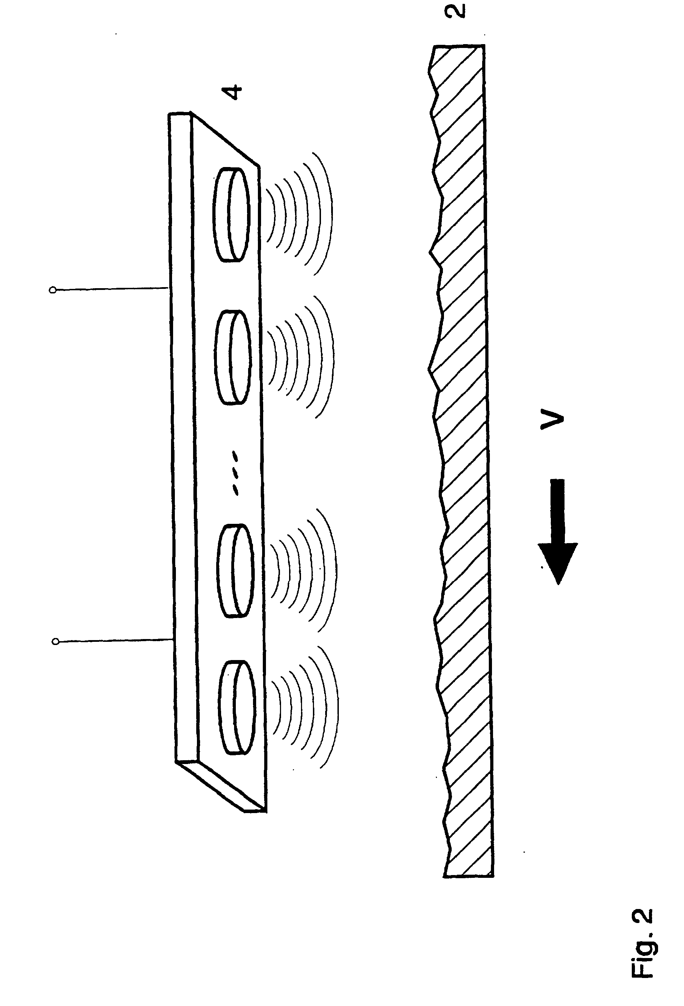

Fig. 2 zeigt dagegen eine Ortsfrequenzfilterung mit akusto-elektronischem Sensor, bei dem die im Array angeordneten Schwinger sowohl im Sende als auch im Empfangsbetrieb arbeiten.

Der Sensor nimmt eine örtliche Abtastung eines beliebig strukturierten Objektes, d.h. eine Abbildung auf einen Vektor der Länge N, vor. Die Anzahl N ist bekanntermaßen durch die Anzahl der Detektorelemente des Sensors fest vorgegeben. Der Integrator realisiert eine virtuelle Abtastung, die erfindungsgemäß durch den Skalierungsfaktor m variiert werden kann. Der Skalierungsfaktor kann variabel zwischen l und N eingestellt werden. Die Bildinformation wird rasterartig erfaßt und derart zyklisch in die Transportregister in Form von Ladungspaketen übertragen, daß die Akkumulation der Ladungspakete aufeinanderfolgender Detektorelemente vorgenommen wird, wobei durch deren Selektion und Taktung Integrationsrichtung und -intervall festgelegt sind. Dies erfolgt durch eine spezielle Betaktung des oder der Transportschieberegister mit der m-fachen Frequenz bezogen auf die zyklische Ladungsübernahme in selbige Register, wobei m variabel zwischen 1 und N in ganzen Schritten einstellbar ist. Der so gewählte Skalierungsfaktor m bewirkt eine Änderung der abtastenden Ortsfrequenz und ermöglicht damit eine Beeinflussung der Filtercharakteristik der Ortsfrequenzfilters z.B. hinsichtlich seiner Selektivität. Bekanntermaßen wird die Selektivität eines diskreten Filters durch die Anzahl seiner Koeffizienten festgelegt, womit gleichermaßen die Filterordnung festliegt. Für ein Filter n-ter Ordnung ist ein eindimensionaler Eingangsvektor der Länge n+l erforderlich. Bezogen auf den Sensor wirkt sich die zunehmende Schmalbandigkeit des resultierenden Ortsfrequenzfilters nachteilig auf die Richtungsselektivität aus. Kleine Winkeländerungen der Richtung der Objektbewegung führen dann zu einem Signalausfall. Eine Variation des Skalierungsfaktors m reduziert die Richtungsselektivität und kompensiert diesen Nachteil. Gleichermaßen führt eine Erhöhung des Skalierungsfaktors bei gleichbleibendem Integrationsergebnis zu einer Verringerung der abtastenden Ortsfrequenz, die es erlaubt, Objekte höherer Geschwindigkeit ohne Aliasing-Fehler zu filtern. Dies ist insbesondere dann von Vorteil, wenn bei Sensoren die vorgegebene maximale Taktfrequenz die Meßdynamik des Systems begrenzt.

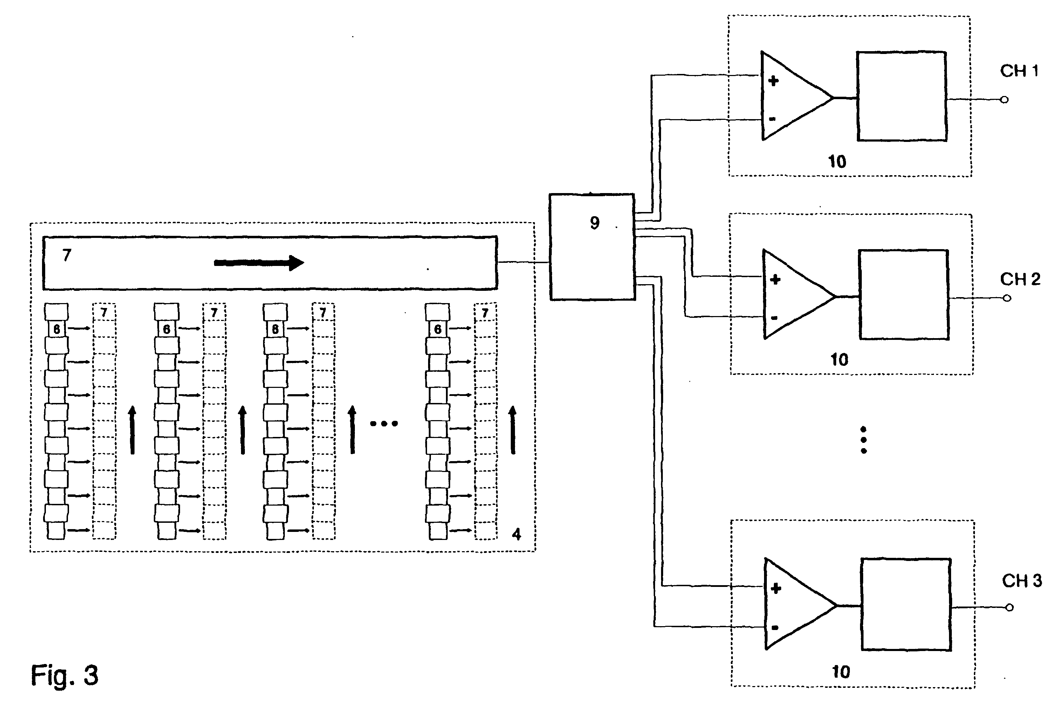

Der in Fig. 3 dargestellte Intergrator **3** enthält einen Sensor **4**, bestehend aus Detektorflächen **6**, welche die Gitterelemente bilden, die die Bildinformation rasterartig erfassen, und Verbindungsbaugruppen **7**, bestehend aus Speicher- und Transportelementen, die ein oder mehrere Ausgänge besitzen, denen eine mehrkanalig ausgeführte Separierstufe **9**. zugeordnet ist, wobei jedem Ausgangskanalpaar der Separierstufe eine Signalverarbeitungseinheit **10** nachgeschaltet ist, enthält. Die aktive Zone der Detektorelemente wird bei CCD-Bauteilen durch die Gate-Elektroden **8** begrenzt.
Die erfindungsgemäße Vorrichtung findet ihre Anwendung auf optische Sensoren in Form von Photodiodenarrays, CCD-Zeilen oder -Matrizen mit ein oder mehreren Transportregistem bzw. nach anderen physikalischen Wirkprinzipien arbeitenden Sensoren, wobei die Detektorfläche parallel zur Objektoberfläche bzw. deren Bewegung und die Detektorachse in Bewegungsrichtung ausgerichtet ist. Es können z.B. akustische, thermische, kapazitive oder Mikrowellen-Sensoren eingesetzt werden.
Je nach gewünschter Filtercharakteristik wird der Skalierungsfaktor zwischen l und N gewählt. Betreibt man den Integrator ausgangsseitig mit mehren Kanälen und einem entsprechend abgestimmten Skalierungsfaktor, so lassen sich unterschiedliche Signalverarbeitungsstrukturen realisieren. Eine entsprechend der Skalierung vorgenommene Zuordnung der Elemente der Speicher- und Transporteinrichtung sowie anschließende Separierung gestattet die Realisierung des erfindungsgemäßen Verfahrens mit unterschiedlich strukturierten Sensoren, z.B. CCD-Zeilen oder -Matrizen.

Eine vorteilhafte Ausführungsart der erfindungsgemäßen Schaltungsanordnung besteht darin, daß dem Integrator **3** am Signalausgang eine m-kanalige Separierstufe **9** angeschlossen ist, an deren Kanälen paarweise eine Signalverarbeitungseinheit **10** angeschlossen ist.

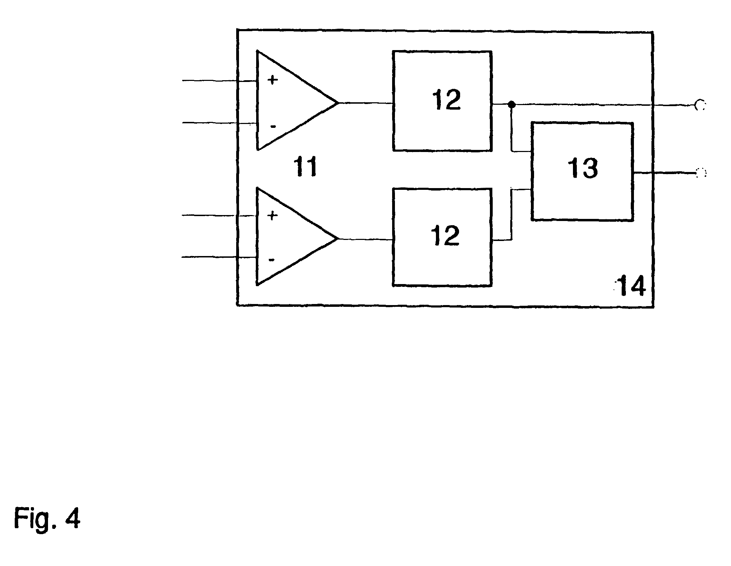

Weiterhin ist es nach einer Ausführungsart der Erfindung in Fig. 4 vorgesehen, daß die dem Integrator angeschlossene Signalverarbeitungseinheit **14** vier Eingangskanäle und zwei Signalpfade besitzt, die Eingänge paarweise angeordnet sind, daß jedes Paar an einen Differenzbildner **11** angeschlossen ist, indem der eine Zweig an den positiven Eingang und der andere Zweig an den negativen Eingang geführt ist, der Ausgang auf einen Tiefpaß **12** geführt ist, und die zwei Signalpfade nach dem Tiefpaß **12** auf einen Phasendetektor **13** geführt werden.

Hier realisiert der Differenzbildner einen Amplitudenvergleich, dessen Ergebnis zu unterschiedlichen Zeiten einen Nulldurchgang aufweisen kann. Vergleicht man beide Signalpfade mittels Phasendetektor, so lassen Zeitdifferenzen Rückschlüsse auf die Phasenlage zwischen beiden Signalen zu. Damit liefert die Phase Information über die Richtung und Häufigkeit der Objekte, die bei alleiniger Integration verlorengehen würde.

Im vorliegenden Ausführungsbeispiel ist im Integrator ein Schieberegister realisiert mit einem Skalierungsfaktor m>=4 für die Phasendetektion.

Eine weitere Ausführung realisiert im Integrator zwei Schieberegister mit einem Skalierungsfaktor m>=2 für die Phasendetektion.

Eine weitere Ausführungsform beinhaltet, daß der Integrator zweidimensional aufgebaut ist, und jeder Dimension ein Skalierungsfaktor zugeordnet ist. Es ist jedoch für eine vorher festgelegte Richtung vorteilhaft, die Ortsfrequenzfilterung mehrspurig vorzunehmen, so daß eine weitere Realisierung einen Integrator enthält, der n-kanalig, eindimensional aufgebaut ist und jedem Kanal ein Skalierungsfaktor zugeordnet ist.

Die unterschiedliche Struktur der Speicher- und Transportelemente im Falle der genannten Ausführungsbeispiele durch jeweils ein oder mehrere Schieberegister realisiert, läßt sich erfindungsgemäß durch eine entsprechende Wahl des Skalierungsfaktors kompensieren. Damit sind je nach Ausführung des Integrators mit gleicher Struktur unterschiedliche Signalverarbeitungseigenschaften bzw. bei verschiedenen Ausführungen mit unterschiedlicher Struktur zusätzlich auch gleiche oder ähnliche Signalverarbeitungseigenschaften realisierbar. Störungen infolge einer endlichen, zeitdiskreten Abtastung werden durch eine entsprechende optischen Tiefpaßfilterung unterdrückt.

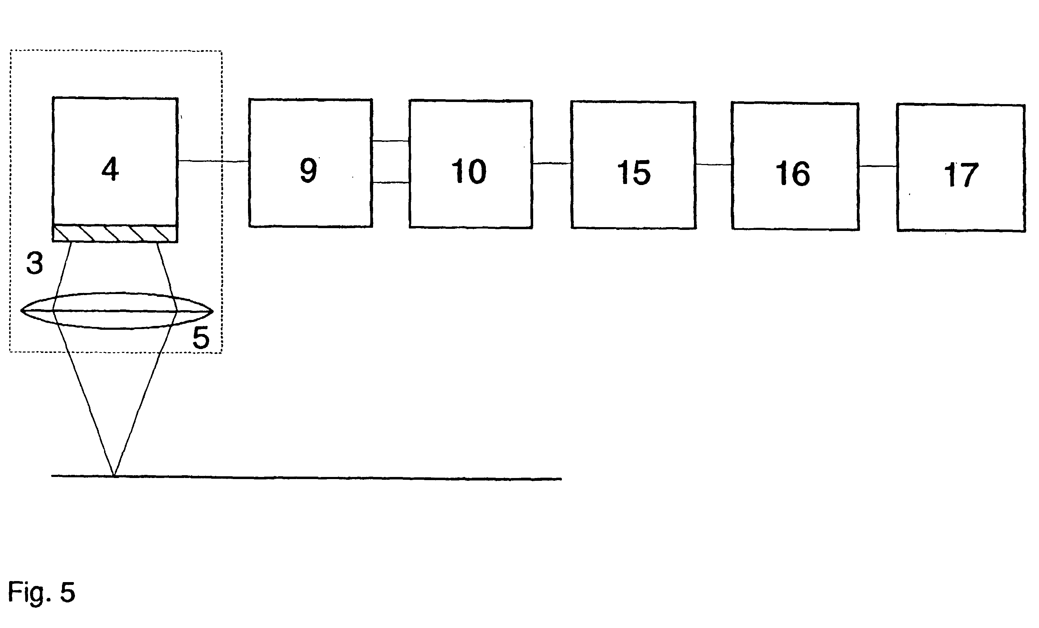

Fig. 5 zeigt den Integrator **3** mit Optik **5** und Sensor **4** in einer Anordnung zur Ortsfrequenzfilterung. Die Sensorsignale werden der Separierstufe **9** zugeführt, die die Information zweikanalig aufsplittet. Ihr nachgeschaltet ist ein Zerro-Crossing-Detektor/Counter **15**, der die Signalfrequenz bestimmt, wobei ein Plausibilitätstest vorgenommen wird, der u.a. in der Lage ist Fehler infolge von Phasensprüngen, Rauschen, etc. zu eleminieren. Die Frequenzdaten werden einer Kennlinien-Linearisierung **16** unterzogen und an eine Anzeige **17** ausgegeben. Je nach Skalierung ist eine andere Linearisierung vorzunehmen. Die Kennlinien-Charakteristik kann dann intern umgeschaltet werden.

Die Frequenzauswertung wird derart vorgenommen, daß eine Anzahl von K Zählregistern vorhanden sind, die gleichzeitig und parallel von einem Muttertakt versorgt werden und eine Zeitsteuerung die zyklische Ansteuerung nach dem Rotationsprinzip vornimmt, so daß die Register die einlaufenden Taktimpulse aufsummieren, wobei sie überlappend und innerhalb einer durch die Steuerung vorgegebenen Zähl-Zeitdauer aktiv sind, d.h. das erste Register anfängt, mit einer vorgegebenen Verzögerung das zweite Register startet, die weiteren Register jeweils verzögert folgen und nach dem Start des k-ten Registers, das erste Register wieder beginnt, wobei Verzögerung und Zähl-Zeitdauer programierbar sind.

Die Register-Anzahl ist von l bis K wählbar, wobei es gleich ist, ob die jeweils gewählte Anzahl physisch die maximale Anzahl ist oder aus einer größeren Anzahl vorhandener Register nur jeweils die benötigte Anzahl benutzt wird.

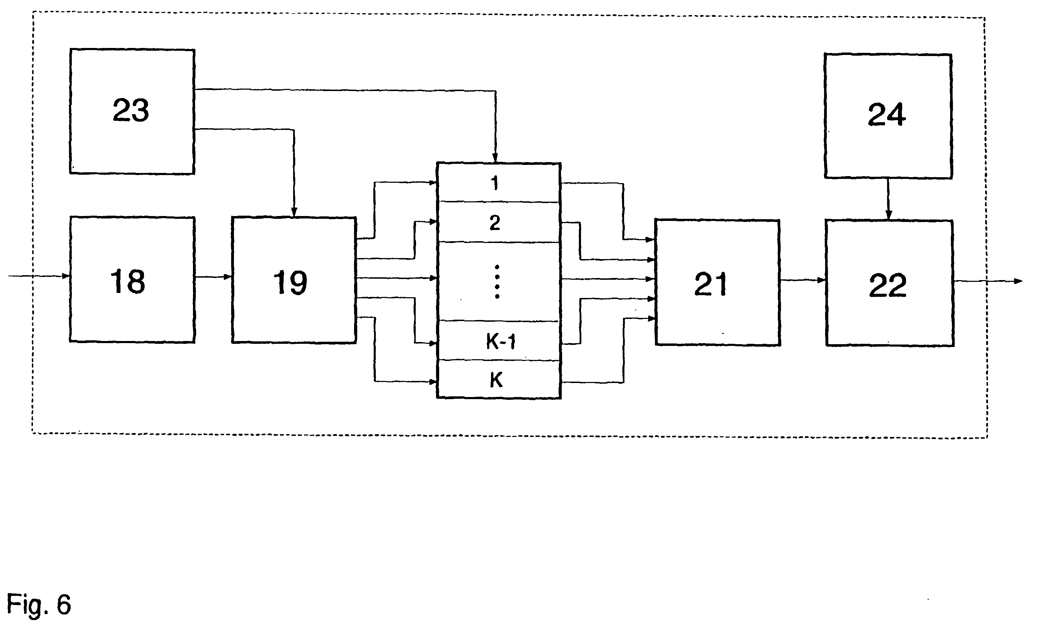

Ein Ausführungsbeispiel zur Ortsfrequenzfilterung mit Frequenzauswertung durch Zählung der Nulldurchgänge und Zeitmessung ist in Fig. 6 dargestellt. Es ist der Zerro-Crossing-Detektor/Counter **15** abgebildet, der eine Triggerstufe **18**, einen Kanalschalter **19**, Registerblock **20**, einen Multiplexer **21**, eine Arrithmetik-Einheit **22**, Zeit-Ablaufsteuerung **23** und Verknüpfungsregister **24** enthält. Der Ausgang der Triggerstufe **18** ist auf einen Kanalschalter **19** geführt, der über eine Anzahl K Ausgänge verfügt, die mit einem jeweils zugehörigem Register aus dem Registerblock **20** verbunden sind, die Registerausgänge sind auf einen Multiplexer **21** geführt , der das jeweilige Zählergebnis an eine nachgeschaltete Arrithmetik-Einheit **22** weitergibt, wobei die Arrithmetik-Einheit über ein Verknüpfungsregister **24** verfügt, und eine Zeit-Ablaufsteuerung **23** die Vorgänge zeitlich steuert. Die Register sind je nach erforderlicher Summationslänge z.B. 8, 16, 24 bzw. 32-Bit lang. Sie sind mehrkanalig ausgeführt, d.h. jedes Register besitzt mehere Zähler und getrennte Ein- und Ausgabepuffer.

Der Registerblock 20 wird durch einen FIFO-Block realisiert.

Nach einem weiteren Ausführungsbeispiel wird der Zerro-Crossing-Detektor/Counter **15** in seiner Struktur durch einen Mikrokontroller mit internen oder externen RAM-Zellen realisiert.

## Patentansprüche

1. Verfahren zur Ortsfrequenzfilterung von Bildinformationen beliebig strukturierter Objekte mittels lichtfeldartiger Strukturen mit gitterartigem Aufbau und unter Einsatz von optischen Sensoren in Form von Photodiodenarrays, CCD-Zeilen oder CCD-Matrizen mit einem oder mehreren Transportschieberegistern, wobei die Detektorfläche parallel zur Objektoberfläche bzw. deren Bewegung und die Detektorachse in Bewegungsrichtung ausgerichtet sind, **gekennzeichnet durch** folgende Schritte:
- rasterartige Erfassung der Bildinformation mittels eines Sensors (4), welcher ein Gitter aus Detektorflächen (6) als Gitterelemente und Distanzflächen als Übergangszonen bildet,
- Integration der Bildinformation über den Ort **durch** zyklisches Auslesen und Akkumulieren mittels des Sensors (4) unter Einbeziehung der Bildinformationen ausgewählter Detektorflächen in die Integration, wobei bei CCD-Zeilen oder CCD-Matritzen die Bildinformationen rasterartig erfaßt und derart zyklisch in die Transportschieberegister in Form von Ladungspaketen übergeben werden, daß die Akkumulation der Ladungspakete aufeinanderfolgender Detektorelemente in den Transportschieberegistern vorgenommen wird, wobei **durch** deren Selektion und Taktung Integrationsrichtung und -intervall festgelegt sind, wobei ein oder mehrere Transportschieberegister zum Zwecke der Ladungsakkumulation mit der m-fachen Taktfrequenz, bezogen auf die zyklische Ladungsübernahme in selbige Transportschieberegister, angesteuert werden, wobei m variabel in geradzahlig ganzen Schritten eingestellt ist,
- Separierung der Ausgangssignale des Sensors (4) nach erfolgter Integration in einer oder mehreren mehrkanaligen Separierstufen (9),
- Verarbeitung der die Separierstufen (9) verlassenden Signale in, den Separierstufen nachgeschalteten, eine Signalformung vornehmende, Signalverarbeitungseinheiten (10), wobei die Bestimmung der Signalfrequenz in einem sich anschließenden Zerro-Crossing-Detektor/Counter (15) erfolgt, der gleichzeitig einen Plausibilitätstest vornimmt, und die Frequenzdaten in einer abschließenden Kennlinien-Linearisierung (16) unterzogen werden.

2. Verfahren nach Anspruch 1, **dadurch gekennzeichnet, daß** zur Frequenzauswertung durch Zählung der Nulldurchgänge und Zeitmessung eine Anzahl von K-Zählregistern vorhanden sind, die gleichzeitig und parallel von einem Muttertakt versorgt werden und eine Zeitsteuerung die zyklische Ansteuerung nach dem Rotationsprinzip vornimmt, indem die K Zählregister der Reihenfolge ihrer Ordnungszahl nach angesteuert werden, wobei nach Erreichen der höchsten Ordnungszahl mit der niedrigsten wieder von vorn begonnen wird, wobei die Zählregister die einlaufenden Taktimpulse aufsummieren, wobei sie überlappend und innerhalb einer durch die Steuerung vorgegebenen Zähl-Zeitdauer aktiv sind, d.h. das erste Zählregister anfängt, mit einer vorgegebenen Verzögerung das zweite Zählregister startet, die weiteren Zählregister jeweils verzögert folgen und nach dem Start des K-ten Zählregisters, das erste Zählregister wieder beginnt, wobei Verzögerung und Zähl-Zeitdauer programmierbar sind.

3. Vorrichtung zur Ortsfrequenzfilterung von Bildinformationen beliebig strukturierter Objekte mittels lichtfeldartiger Strukturen mit gitterartigem Aufbau und unter Einsatz von optischen Sensoren in Form von Photodiodenarrays, CCD-Zeilen oder CCD-Matrizen mit einem oder mehreren Transportschieberegistern, wobei die Detektorfläche parallel zur Objektoberfläche bzw. deren Bewegung und die Detektorachse in Bewegungsrichtung ausgerichtet sind, **dadurch gekennzeichnet, daß** ein Integrator (3) aus einem Sensor (4) mit Optik (5) besteht, wobei der Sensor (4) ein Gitter und Verbindungsbaugruppen (7) aufweist, wobei das Gitter aus Detektorflächen (6) als Gitterelemente und Distanzflächen als Übergangszonen gebildet wird und die Verbindungsbaugruppen (7) einen gemeinsamen Ausgang zum Ausgang des Sensors (4) besitzen, an dessen Ausgang eine m-kanalig ausgeführte Separierstufe (9) angeschlossen ist und jedem Ausgangskanalpaar der Separierstufe (9) eine Signalverarbeitungseinheit (10) nachgeschaltet ist und sich dem Ausgang der Signalverarbeitungseinheit (10) eine einkanalige Frequenzauswertung anschließt, bestehend aus einem Zerro-Crossing-Detektor/Counter (15), dem ein Kennlinien-Linearisierungsmodul (16) nachgeschaltet ist, und dessen Ausgang auf eine Anzeigeeinheit (17) geführt ist.

4. Vorrichtung nach Anspruch 3, **dadurch gekennzeichnet, daß** bei Einsatz einer CCD-Zeile oder CCD-Matrix als Sensor (4) die Verbindungsbaugruppen (7) zur Vornahme einer zyklischen Ladungsakkumulation als Speicher- und Transportelemente ausgebildet sind.

5. Vorrichtung nach Anspruch 3, **dadurch gekennzeichnet, daß** dem Integrator (3) am Signalausgang eine m-kanalige Separierstufe (9) nachgeschaltet ist, an deren Kanäle paarweise Signalverarbeitungseinheiten (10) angeschlossen sind.

6. Vorrichtung nach Anspruch 3 und 5, **dadurch gekennzeichnet, daß** der Integrator (3) zweidimensional aufgebaut ist, und jeder Dimension ein Skalierungsfaktor zugeordnet ist.

7. Vorrichtung nach Anspruch 3 und 5, **dadurch gekennzeichnet, daß** der Integrator (3) n-kanalig, eindimensional aufgebaut ist, und jedem Kanal ein Skalierungsfaktor zugeordnet ist.

8. Vorrichtung nach Anspruch 3 und 4, **dadurch gekennzeichnet, daß** im Integrator (3) ein Schieberegister mit einem Skalierungsfaktor m≥4 für die Phasendetektion realisiert ist.

9. Vorrichtung nach Anspruch 3 und 4, **dadurch gekennzeichnet, daß** im Integrator (3) ein Schieberegister mit einem Skalierungsfaktor m≥2 für die Phasendetektion realisiert ist.

10. Vorrichtung nach Anspruch 3, **dadurch gekennzeichnet, daß** die Signalverarbeitungseinheit (10) vier Eingangskanäle und zwei Signalpfade besitzt, die Eingänge paarweise angeordnet sind, daß jedes Paar an einen Differenzbildner (11) angeschlossen ist, indem der eine Zweig an den positiven Eingang und der andere Zweig an den negativen Eingang geführt ist, der Ausgang auf einen Tiefpaß (12) geführt ist, und die zwei Signalpfade nach dem Tiefpaß (12) auf einen Phasendetektor (13) geführt sind.

11. Vorrichtung nach Anspruch 3, **dadurch gekennzeichnet, daß** bei Ortsfrequenzfilterung mit Frequenzauswertung durch Zählung der Nulldurchgänge und Zeitmessung der Zerro-Crossing-Detektor/Counter (15) eine Triggerstufe (18) aufweist, deren Ausgang auf einen Kanalschalter (19) geführt ist, der über eine Anzahl K-Ausgänge verfügt, die mit einem jeweils zugehörigen Register aus dem Zählregisterblock (20) verbunden sind, die Registerausgänge auf einen Multiplexer (21) geführt sind, der das jeweilige Zählergebnis an eine nachgeschaltete Arithmetik-Einheit (22) weitergibt, wobei die Arithmetik-Einheit (22) über ein Verknüpfungsregister (24) verfügt, und der Zerro-Crossing-Detektor/Counter (15) eine Zeit-Ablaufsteuerung (23) enthält.

12. Vorrichtung nach Anspruch 11, **dadurch gekennzeichnet, daß** der Zählregisterblock (20) ein FIFO-Block ist.

13. Vorrichtung nach Anspruch 11, **dadurch gekennzeichnet, daß** der Zerro-Crossing-Detektor/Counter (15) ein Mikrokontroller mit internen oder externen RAM-Zellen ist.

## Claims

1. Method for the spatial frequency filtering of image information of arbitrarily structured objects by means of light-field-like structures with a grating-like construction and using optical sensors in the form of photodiode arrays, CCD linear arrays or CCD matrices with one or more transport shift registers, the detector area being oriented parallel to the object surface or the movement thereof and the detector axis being oriented in the direction of movement,
**characterized by** the following steps:
- raster-like acquisition of the image information by means of a sensor (4), which forms a grating comprising detector areas (6) as grating elements and spacer areas as transition zones,
- integration of the image information over the location by cyclic read-out and accumulation by means of the sensor (4) whilst including the image information of selected detector areas in the integration, in the case of CCD linear arrays or CCD matrices the image information being acquired in a raster-like manner and being transferred cyclically into the transport shift registers in the form of charge packets in such a way that the accumulation of the charge packets of successive detector elements is performed in the transport shift registers, the selection and clocking thereof being used to define integration direction and interval, one or a plurality of transport shift registers, for the purpose of charge accumulation, being driven at m times the clock frequency, referring to the cyclic charge acceptance into the same transport shift registers, where m is set in a variable manner in even-numbered whole steps,
- separation of the output signals of the sensor (4) after integration in one or a plurality of multichannel separating stages (9),
- processing of the signals leaving the separating stages (9) in signal processing units (10), which are connected downstream of the separating stages and perform signal shaping, the signal frequency being determined in a downstream zero-crossing detector/counter (15), which simultaneously performs a plausibility test, and the frequency data are subjected to a concluding characteristic-curve linearization (16).

2. Method according to Claim 1, **characterized in that**, for the purpose of frequency evaluation by counting the zero crossings and time measurement, a number of K counting registers are present, which are supplied simultaneously and in parallel by a master clock, and a time control performs the cyclic driving according to the rotation principle by the K counting registers being driven in the order of their ordinal numbers, in which case, after the highest ordinal number has been reached, the lowest is used again to begin the order anew, the counting registers adding up the incoming clock pulses, in which case they are active in an overlapping manner and within a counting time duration predetermined by the control, i.e. the first counting register starts, the second counting register starts after a predetermined delay, the further counting registers follow in each case in a delayed manner and, after the K-th register has started, the first counting register begins again, delay and counting time duration being programmable.

3. Apparatus for the spatial frequency filtering of image information of arbitrarily structured objects by means of light-field-like structures with a grating-like construction and using optical sensors in the form of photodiode arrays, CCD linear arrays or CCD matrices with one or more transport shift registers, the detector area being oriented parallel to the object surface or the movement thereof and the detector axis being oriented in the direction of movement,
**characterized in that** an integrator (3) comprises a sensor (4) with optical arrangement (5), the sensor (4) having a grating and connection assemblies (7), the grating being formed from detector areas (6) as grating elements and spacer areas as transition zones and the connection assemblies (7) having a common output to the output of the sensor (4), to whose output a separating stage (9) of m-channel embodiment is connected, and a signal processing unit (10) being connected downstream of each output channel pair of the separating stage (9), and the output of the signal processing unit (10) being followed by a one-channel frequency evaluation, comprising a zero-crossing detector/counter (15), downstream of which a characteristic-curve linearization module (16) is connected, and the output thereof being passed to a display unit (17).

4. Apparatus according to Claim 3, **characterized in that** when a CCD linear array or CCD matrix is used as sensor (4) the connection assemblies (7) are designed to perform cyclic charge accumulation as storage and transport elements.

5. Apparatus according to Claim 3, **characterized in that** an m-channel separating stage (9) is connected downstream of the integrator (3) at the signal output, to the channels of which separating stage, in pairs, signal processing units (10) are connected.

6. Apparatus according to Claims 3 and 5, **characterized in that** the integrator (3) is of two-dimensional construction, and each dimension is assigned a scaling factor.

7. Apparatus according to Claims 3 and 5, **characterized in that** the integrator (3) is of n-channel, one-dimensional construction, and each channel is assigned a scaling factor.

8. Apparatus according to Claims 3 and 4, **characterized in that** a shift register with a scaling factor m≥4 for the phase detection is realized in the integrator (3).

9. Apparatus according to Claims 3 and 4, **characterized in that** a shift register with a scaling factor m≥4 for the phase detection is realized in the integrator (3).

10. Apparatus according to Claim 3, **characterized in that** the signal processing unit (10) has four input channels and two signal paths, and the inputs are arranged in pairs, **in that** each pair is connected to a difference-forming unit (11) by one branch being connected to the positive input and the other branch to the negative input, the output is connected to a low-pass filter (12), and the two signal parts, downstream of the low-pass filter (12), are connected to a phase detector (13).

11. Apparatus according to Claim 3, **characterized in that**, in the case of spatial frequency filtering with frequency evaluation by counting the zero crossings and time measurement, the zero-crossing detector/counter (15) has a trigger stage (18), whose output is connected to a channel switch (19), which is provided with a number of K outputs which are connected to a respectively associated register from the counting register block (20), the register outputs are connected to a multiplexer (21), which forwards the respective counting result to an arithmetic unit (22) connected downstream, the arithmetic unit (22) being provided with a logic combination register (24), and the zero-crossing detector/counter (15) contains a time sequence control (23).

12. Apparatus according to Claim 11, **characterized in that** the counting register block (20) is a FIFO block.

13. Apparatus according to Claim 11, **characterized in that** the zero-crossing detector/counter (15) is a microcontroller with internal or external RAM cells.

## Revendications

1. Procédé pour filtrer la fréquence locale des informations d'image d'objets structurés de manière quelconque au moyen de structures de type champ lumineux ayant une constitution de type grille et en utilisant des capteurs optiques sous la forme de réseaux de photodiodes, de lignes CCD ou de matrices CCD avec un ou plusieurs registres à décalage de transport, la surface du déflecteur étant parallèle à la surface de l'objet ou à son mouvement et l'axe du détecteur étant aligné parallèlement au sens du déplacement, **caractérisé par** les étapes suivantes :
- détection tramée de l'information d'image au moyen d'un capteur (4), lequel forme une grille de surfaces de détecteur (6) comme éléments de grille et des surfaces d'écartement comme zones de transfert,
- intégration de l'information d'image sur le lieu par lecture cyclique et accumulation au moyen du détecteur (4) en incluant dans l'intégration les surfaces de détecteur sélectionnées des informations d'image, les informations d'image étant détectées de manière tramée dans le cas des lignes CCD ou des matrices CCD et transmises de manière cyclique dans les registres à décalage de transport sous la forme de paquets de charges de manière à réaliser l'accumulation de paquets de charges des éléments détecteurs successifs dans les registres à décalage de transport, leur sélection et leur cadencement permettant de déterminer le sens et l'intervalle d'intégration, un ou plusieurs registres à décalage de transport étant commandés par m fois la fréquence de cycle, par rapport à la prise en charge cyclique des charges dans le même registre à décalage de transport, dans le but d'accumuler les charges, m étant un nombre de pas variable entier,
- séparation des signaux de sortie du capteur (4) après avoir réalisé l'intégration en un ou plusieurs étages de séparation (9) à plusieurs canaux,
- traitement des signaux qui quittent les étages de séparation (9) dans des unités de traitement du signal (10) branchés après les étages de séparation et effectuant une mise en forme des signaux, la détermination de la fréquence du signal étant effectuée dans un détecteur/compteur de passage à zéro (15) qui vient s'y raccorder et qui effectue en même temps un test de plausibilité, et les données de fréquence sont ensuite soumises à une linéarisation de caractéristique (16).

2. Procédé selon la revendication 1, **caractérisé en ce qu'**il existe un nombre K de registres de comptage pour évaluer la fréquence par comptage des passages à zéro et mesure du temps, lesquels sont alimentés simultanément et en parallèle par une horloge de référence et une commande temporisée effectue la commande cyclique d'après le principe de la rotation **en ce que** les K registres de comptage sont commandés dans l'ordre de leur numéro d'ordre, le cycle recommençant par le début par le numéro d'ordre le plus petit après avoir atteint le numéro d'ordre le plus élevé, les registres de comptage additionnant les impulsions d'horloge entrantes, ceux-ci étant actifs pendant des durées qui se chevauchent et qui sont déterminées par la commande, ce qui veut dire que le premier registre de comptage commence, le deuxième registre de comptage commence avec un certain retard, les registres suivants suivent chacun avec un retard et le premier registre de comptage recommence après le départ du K-ième registre de comptage, le retard et la durée de chaque unité étant programmables.

3. Dispositif pour filtrer la fréquence locale des informations d'image d'objets structurés de manière quelconque au moyen de structures de type champ lumineux ayant une constitution de type grille et en utilisant des capteurs optiques sous la forme de réseaux de photodiodes, de lignes CCD ou de matrices CCD avec un ou plusieurs registres à décalage de transport, la surface du déflecteur étant parallèle à la surface de l'objet ou à son mouvement et l'axe du détecteur étant aligné parallèlement au sens du déplacement, **caractérisé en ce qu'**un intégrateur (3) se compose d'un capteur (4) avec une optique (5), le capteur (4) présentant une grille et des modules de liaison (7), la grille étant réalisée sous la forme de surfaces de détecteur (6) comme éléments de grille et de surfaces d'écartement comme zones de transfert et les modules de liaison (7) possédant une sortie commune vers la sortie du détecteur (4), à la sortie duquel est raccordé un étage de séparation (9) à plusieurs canaux et une unité de traitement du signal (10) est branchée à la suite de chaque paire de canaux de sortie de l'étage de séparation (9) et la sortie de l'unité de traitement du signal (10) se raccorde à un circuit d'évaluation de la fréquence qui se compose d'un détecteur/compteur de passage à zéro (15) après lequel est branché un module de linéarisation de caractéristique (16) et dont la sortie est branchée à une unité d'affichage (17).

4. Dispositif selon la revendication 3, **caractérisé en ce qu'**en cas d'utilisation d'une ligne CCD ou d'une matrice CCD comme capteur (4), les modules de liaison (7) sont réalisés sous la forme d'éléments de mémorisation et de transport pour effectuer une accumulation cyclique des charges.

5. Dispositif selon la revendication 3, **caractérisé en ce que** la sortie du signal de l'intégrateur (3) est branchée à un étage séparateur à m canaux (9) aux paires de canaux duquel sont branchées des unités de traitement du signal (10).

6. Dispositif selon la revendication 3 et 5, **caractérisé en ce que** l'intégrateur (3) est construit en deux dimensions et qu'un facteur d'échelle est associé à chaque dimension.

7. Dispositif selon la revendication 3 et 5, **caractérisé en ce que** l'intégrateur (3) est constitué d'une seule dimension de n canaux et qu'un facteur d'échelle est associé à chaque canal.

8. Dispositif selon la revendication 3 et 4, **caractérisé en ce qu'**un registre à décalage ayant un facteur d'échelle m ≥ 4 pour la détection de phase est réalisé dans l'intégrateur (3).

9. Dispositif selon la revendication 3 et 4, **caractérisé en ce qu'**un registre à décalage ayant un facteur d'échelle m ≥ 2 pour la détection de phase est réalisé dans l'intégrateur (3).

10. Dispositif selon la revendication 3, **caractérisé en ce que** l'unité de traitement du signal (10) possède deux canaux d'entrée et deux chemins de signal, les entrées sont disposées par paires, que chaque paire est raccordée à un calculateur de différence (11) en acheminant une branche à l'entrée positive et l'autre branche à l'entrée négative, la sortie est acheminée à un filtre passe-bas (12), et les deux chemins de signal après le filtre passe-bas (12) sont acheminés à un détecteur de phase (13).

11. Dispositif selon la revendication 3, **caractérisé en ce qu'**en cas de filtrage de la fréquence locale avec évaluation de la fréquence par comptage des passages à zéro et mesure du temps, le détecteur/compteur de passage à zéro (15) présente un étage de déclenchement (18) dont la sortie est acheminée à un commutateur de canal (19) qui dispose d'un nombre K de sorties qui sont chacune reliées à un registre correspondant du bloc de registres de comptage (20), les sorties des registres sont acheminées à un multiplexeur (21) qui retransmet le résultat du compteur correspondant à une unité arithmétique (22) branchée en aval, l'unité arithmétique (22) disposant d'un registre combinatoire (24) et le détecteur/compteur de passage à zéro (15) contient une commande d'écoulement du temps (23).

12. Dispositif selon la revendication 11, **caractérisé en ce que** le bloc de registres de comptage (20) est un bloc FIFO.

13. Dispositif selon la revendication 11, **caractérisé en ce que** le détecteur/compteur de passage à zéro (15) est un microcontrôleur muni de cellules de mémoire internes ou externes.
